# EUROPÄISCHE PATENTSCHRIFT

(11) **EP 3 362 381 B1**
(45) Veröffentlichungstag und Bekanntmachung des Hinweises auf die Patenterteilung: **11.03.2026**
(21) Anmeldenummer: 16770441.0
(22) Anmeldetag: 21.09.2016
(51) Int. Cl.: B65G 17/00, H02P 27/04, H02P 5/747

(54) **ANLAGE MIT ELEKTROMOTOREN UND VERFAHREN ZUM BETREIBEN EINER ANLAGE MIT MECHANISCH GEKOPPELTEN ELEKTROMOTOREN**
SYSTEM COMPRISING ELECTRIC MOTORS, AND METHOD FOR OPERATING A SYSTEM COMPRISING MECHANICALLY COUPLED ELECTRIC MOTORS
SYSTÈME MUNI DE MOTEURS ÉLECTRIQUES ET PROCÉDÉ PERMETTANT DE FAIRE FONCTIONNER UN SYSTÈME MUNI DE MOTEURS ÉLECTRIQUES COUPLÉS MÉCANIQUEMENT

(30) Priorität: 15.10.2015 DE 102015013291
(43) Veröffentlichungstag der Anmeldung: 22.08.2018
(73) Patentinhaber: SEW-EURODRIVE GmbH & Co. KG, 76646 Bruchsal (DE)
(72) Erfinder: STEINSDÖRFER, Andreas, 76676 Graben-Neudorf (DE)
(86) Internationale Anmeldenummer: PCT/EP2016/025101
(87) Internationale Veröffentlichungsnummer: WO 2017/063753

(56) Entgegenhaltungen:
- EP-A1- 1 852 375
- EP-A1- 2 612 796
- CH-A1- 707 879
- DE-A1- 102007 006 839
- DE-A1- 3 510 799
- DE-A1- 4 316 798
- DE-B3- 102013 114 782
- DE-U1- 20 108 994
- US-A1- 2010 171 448

## Beschreibung

Die Erfindung betrifft eine Anlage mit Elektromotoren und ein Verfahren zum Betreiben einer Anlage mit mechanisch gekoppelten Elektromotoren.

Es ist allgemein bekannt, dass Förderketten über ein angetriebenes Ritzel antreibbar sind.

Aus der EP 2 612 796 A1 ist als nächstliegender Stand der Technik eine Bremskraftregelung für ein Fahrzeug bekannt.

Aus der DE 10 2007 006 839 A1 ist ein Antrieb für eine fördertechnische Anlage bekannt.

Aus der DE 43 16 798 A1 ist eine Antriebseinrichtung für Hobelanlagen bekannt.

Aus der DE 35 10 799 A1 ist eine Regelung und Steuerung eines Bunkerentleerungswagens für Schlitzbunker bekannt.

Aus der DE 201 08 994 U1 ist ein Antriebssystem für Doppelmittelkettenkratzförderer bekannt.

Aus der CH 707 879 A1 ist eine Regelung von Antrieben von Förderabschnitten eines Fördersystems bekannt.

Aus der EP 1 852 375 A1 ist eine Bremskraftsteuerung für ein Fahrzeug bekannt.

Aus der DE 10 2013 114 782 B3 ist eine Fördervorrichtung für Behälter bekannt.

**Aus der** US 2010/171448 A1 **ist ein Motorsteuerungsgerät bekannt.**

Der Erfindung liegt daher die Aufgabe zugrunde, eine Anlage mit Förderkette kostengünstiger zu überwachen.

Erfindungsgemäß wird die Aufgabe bei der Anlage nach den in Anspruch 1 und bei dem Verfahren nach den in Anspruch 8 angegebenen Merkmalen gelöst.

Wichtige Merkmale der Erfindung bei der Anlage mit Elektromotoren sind, dass jeder Elektromotor eine drehbar gelagerte Rotorwelle aufweist,
wobei die Rotorwellen der Elektromotoren miteinander mechanisch gekoppelt, vorgesehen sind,
wobei die Elektromotoren aus einem einzigen, also gemeinsamen, Umrichter gespeist werden,
wobei die Motoren formschlüssig miteinander gekoppelt vorgesehen sind d.h. als Gruppenantrieb ausgebildet sind,
**wobei** ein Mittel zur Überwachung des Schlupfes jeder Rotorwelle auf Überschreiten eines ersten Schwellwertes vorgesehen ist.

Von Vorteil ist dabei, dass eine zwischen Rotorwelle und Verzahnungsteil angeordnete Rutschkupplung verzichtbar ist. Denn mittels der Überwachung auf Überlastung, also Überschreiten eines ersten Schwellwertes durch den Schlupf, ist ein gefährlicher Zustand erkennbar und der Umrichter dann abschaltbar. Da die anderen Motoren aber ebenfalls von dem Umrichter gespeist werden, weil die Motoren als Gruppenantrieb betrieben sind, wird beim Abschalten des Umrichters ein Abschalten der Motoren bewirkt. Somit ist die Wirkung einer Rutschkupplung elektronisch zumindest in ähnlicher Weise nachbildbar, wobei nicht nur abgeschaltet werden kann sondern zuvor eine Warnung anzeigbar und/oder weiterleitbar ist. Bei einer vorteilhaften Ausgestaltung ist der Umrichter mit einer Steuerung verbunden, die das Mittel zur Überwachung jeweils umfasst. Von Vorteil ist dabei, dass die Steuerung somit die Überwachung, insbesondere auf Überlast, ausführt und den Umrichter dann abhängig vom Ergebnis der Überwachung abschaltet.

**Erfindungsgemäß** ist ein Mittel zur Überwachung des Schlupfes jeder Rotorwelle auf Überschreiten eines zweiten Schwellwertes vorgesehen, wobei der Betrag des zweiten Schwellwertes kleiner als der Betrag des ersten Schwellwertes ist. Von Vorteil ist dabei, dass vor dem Überschreiten des ersten Schwellwertes und somit dem Abschalten zunächst bei beginnender, also sich aufbauender, Lasterhöhung eine Warninformation anzeigbar und/oder weiterleitbar ist. Beispielswiese ist dann auch eine Reduzierung der Fördergeschwindigkeit der Kette veranlassbar, so dass eine weitere Erhöhung der Belastung eines der Antriebe vermeidbar ist und damit auch das Abschalten.

**Erfindungsgemäß** ist das Mittel zur Überwachung des Schlupfes jeder auf Überschreiten des ersten Schwellwertes mittels eines Abschaltpfades mit dem Umrichter verbunden, insbesondere so dass bei Überschreiten des ersten Schwellwertes der Umrichter vom Mittel abschaltbar ist. Von Vorteil ist dabei, dass die Steuerung direkt Zugriff auf den Umrichter hat und diesen abschalten kann.

Bei einer vorteilhaften Ausgestaltung ist jede Rotorwelle drehfest mit einem jeweiligen Verzahnungsteil, also Zahnrad oder Ritzel, verbunden,
wobei die Verzahnungsteile zum Antreiben einer Kette, insbesondere Förderkette,
vorgesehen sind,
insbesondere wobei die Verzahnungsteile zumindest zeitabschnittsweise in die Kette eingreifen, insbesondere also formschlüssig verbunden sind. Von Vorteil ist dabei, dass die formschlüssige Verbindung der Verzahnteile und somit der Rotorwellen mittels einer Kette bewirkbar ist. Im Vergleich zu einem Getriebe ist somit eine weniger starre Verbindung realisiert.

**Erfindungsgemäß** ist das Mittel zur Überwachung des Schlupfes jeder Rotorwelle auf Überschreiten des zweiten Schwellwertes mittels eines Abschaltpfades mit dem Umrichter verbunden, insbesondere so dass bei Überschreiten des zweiten Schwellwertes der Umrichter vom Mittel abschaltbar ist. Von Vorteil ist dabei, dass eine Warninformation herausgebbar ist, bevor ein erster Schwellwert erreicht ist und bei diesem kritisch hohen Schwellwert dann ein Abschalten bewirkt wird.

Bei einer vorteilhaften Ausgestaltung weist der Umrichter eine Steuerelektronik auf, die eingerichtet ist zur Durchführung eines weichen Regelverfahrens, insbesondere eines U/F-Regelverfahren oder eines spannungsgeführten vektororientierten Regelverfahrens verwendet. Von Vorteil ist dabei, dass kleine Drehmomentunterschiede der Motoren ausgleichbar sind über die formschlüssige Verbindung der Rotorwellen, also mittels der Kette.

Wichtige Merkmale bei dem Verfahren zum Betreiben einer Anlage mit mechanisch gekoppelten Elektromotoren, welche von einem einzigen Umrichter gemeinsam gespeist werden, sind, dass der Schlupf jeder Rotorwelle der Elektromotoren überwacht wird auf Überschreiten eines ersten und/oder zweiten Schwellwertes.

Von Vorteil ist dabei, dass eine Überlastkupplung, wie Rutschkupplung, einsparbar ist, indem der Schlupf der einzelnen Motoren bestimmt wird, die zusammen als Gruppenantrieb von einem einzigen Umrichter gespeist werden.

**Erfindungsgemäß** wird bei Überschreiten des zweiten Schwellwertes eine Warnung angezeigt und/oder weitergemeldet, insbesondere über einen Datenbus an zumindest ein weiteres mit dem Datenbus verbundenes elektrisches Gerät,
insbesondere wobei die Sollwertvorgabe, wie Solldrehzahl oder Soll-Drehmoment, des Umrichters reduziert wird. Von Vorteil ist dabei, dass noch vor dem Abschalten des Umrichters eine Warnung anzeigbar ist und somit ein Abschalten vermeidbar ist. Insbesondere ist in diesem Fall eine Verlangsamung der angetriebenen Förderkette eine mögliche Hilfsmaßnahme.

**Erfindungsgemäß** wird bei Überschreiten des ersten Schwellwertes der Umrichter abgeschaltet, insbesondere die Leistungselektronik abgeschaltet oder weggeschaltet wird und/oder die Drehfelderzeugung unterbrochen wird
und/oder die Sollwertvorgabe, wie Solldrehzahl oder Soll-Drehmoment, des Umrichters auf einen sicheren oder verschwindenden Wert, insbesondere Null, reduziert wird. Von Vorteil ist dabei, dass entweder die Ansteuerung der Leistungshalbleiter unwirksam gemacht ist, also die in Halbbrücken angeordneten, einen Wechselrichter bildenden Leistungshalbleiter der Leistungselektronik geöffnet werden und/oder die Erzeugung der pulsweitenmodulierten Ansteuersignale mittels der Steuerelektronik des Umrichters unterbrochen wird.

Die Erfindung wird nun anhand von Abbildungen näher erläutert:

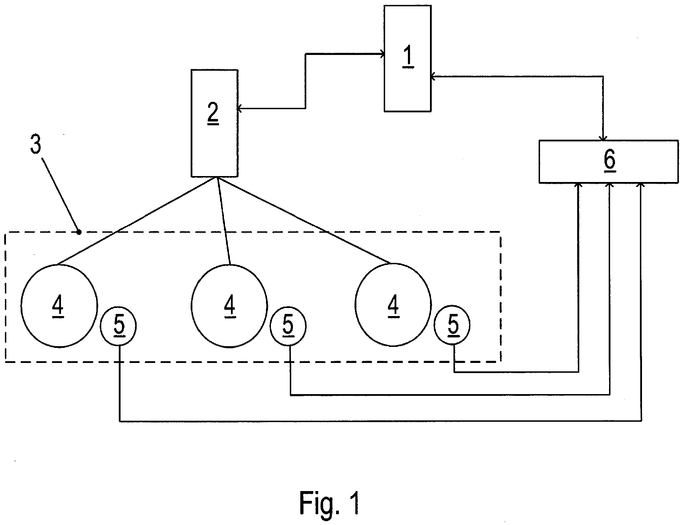

In der Figur 1 ist eine erfindungsgemäße Anlage schematisch dargestellt.

Wie in der Figur dargestellt, speist ein einziger Umrichter 2 mehrere, insbesondere zwei oder mehr, Motoren.

Die Motoren sind hierbei als Asynchronmotoren 4 ausgeführt, deren Rotorwelle jeweils drehfest verbunden ist mit dem drehbar gelagerten Teil eines jeweiligen Winkelsensors 5.

Eine Steuerung 1 ist mittels eines Kommunikationskanals zum Austausch von Daten mit dem Umrichter 2 verbunden. Der Kommunikationskanal ist als Datenbus ausgeführt. Darüber hinaus ist die Steuerung 1 mit einem Eingangsmodul 6, insbesondere mit einem binären Eingangsmodul, verbunden, das mit dem jeweiligen Winkelsensor 5 mittels eines Kommunikationskanals zum Austausch von Daten, insbesondere also Datenbus, verbunden ist.

Der Gleichrichter des Umrichters 2 ist aus einem Drehstromanschluss versorgt, so dass der Gleichrichter ausgangsseitig eine unipolare Spannung, insbesondere Zwischenkreisspannung zur Verfügung stellt, aus der ein Wechselrichter gespeist wird. Der Wechselrichter weist drei Halbbrücken auf, welche pulsweitenmoduliert angesteuert werden. Ausgangsseitig stellt der Wechselrichter auf diese Weise dem Motor eine Drehspannung zur Verfügung, die einen im Wesentlichen sinusförmigen Verlauf aufweist. Jeder der Asynchronmotoren 4 weist einen Stator auf, der eine Drehfeldwicklung aufweist, so dass bei Bestromung mittels des Wechselrichters ein Drehfeld erzeugt wird, dessen Drehfrequenz der Frequenz des sinusförmigen Verlaufs entspricht.

Der jeweilige Rotor des jeweiligen Asynchronmotors weist einen Kurzschlusskäfig auf, so dass der Rotor sich mit einer zur Drehfrequenz der Frequenz des sinusförmigen Verlaufs einen Schlupf aufweisenden Drehfrequenz dreht.

Mittels des mit dem jeweiligen Rotor verbundenen jeweiligen Winkelsensors 5 werden die zu jeweiligen Zeitpunkten vorhandenen Winkelstellungswerte des jeweiligen Rotors erfasst und an das binäre Eingangsmodul geleitet. Von dort werden die Daten weitergeleitet an die Steuerung 1 der erfindungsgemäßen Anlage.

Somit ist es der Steuerung 1 ermöglicht, aus den zu den Zeitpunkten zugeordneten Winkelwerten die Winkelgeschwindigkeiten der jeweiligen Rotoren der jeweiligen Asynchronmotoren zu ermitteln. Auf diese Weise ist somit auch die Bestimmung des aktuellen Schlupfes ermöglicht, also der Drehzahldifferenz zwischen der jeweiligen Winkelgeschwindigkeit des Rotors und der elektrischen Frequenz des sinusförmigen Verlaufs, insbesondere also der elektrischen, vom Umrichter 2 ausgegebenen Sollfrequenz. Die Steuerung 1 führt die genannten Bestimmungen aus und überwacht den jeweiligen aktuellen Schlupf auf Überschreiten eines vorgegebenen Grenzwertes.

Bei festgestelltem Überschreiten wird eine Warnung ausgelöst oder ein Abschalten des Umrichters 2 veranlasst.

Die Asynchronmotoren 4 bilden einen Gruppenantrieb. Dies bedeutet, dass ihre Rotorwellen formschlüssig verbunden sind. So ist jede der Rotorwellen drehfest mit einem jeweiligen Zahnrad oder Ritzel verbunden, das als Kettenrad zum Antreiben einer Kette vorgesehen ist. Somit wird die Förderkette, von den Asynchronmotoren 4 angetrieben. Die Förderkette wiederum ist mit einem zu fördernden Objekt, insbesondere Fördergut, verbunden.

Je nach Steigung und/oder Menge und Position des Förderguts ist die Kette entsprechend unterschiedlich belastet.

Der jeweilige Antrieb bringt zunächst das jeweils aktuell geforderte Drehmoment auf die Förderkette. Hierbei bricht die Istdrehzahl des jeweiligen Rotors proportional zum Drehmoment ein, wie bei Asynchronmaschinen grundlegend bekannt. Wenn es zu einer punktuellen Überlastung an einer Abtriebsstelle der Kette, also bei einem der Antriebe, kommt, ist dies vom Umrichter nicht erkennbar, da der Umrichter nur eine Summenbelastung erkennt. Denn aus dem Ausgangsstrom des Umrichters und seiner Ausgangsspannung ist nur die Gesamtbelastung bestimmbar. Die Aufteilung des Drehmoments auf die einzelnen Motoren ist vom Umrichter aus nicht erfassbar, wenn nur der Ausgangsstromverlauf und der Ausgangsspannungsverlauf des Umrichters bestimmt wird.

Erfindungsgemäß ist also die Förderkette vor punktueller Überlast geschützt.

Wenn also einer der Asynchronmotoren 4 einer zu hohen Belastung ausgesetzt wird, würde der Schlupf des entsprechenden Asynchronmotors ansteigen, bis das von diesem Motor 4 erzeugte Drehmoment weiter einbricht. In diesem Fall würde die Belastung der anderen Motoren ansteigen und auch ein dortiges weiteres Einbrechen bewirken.

Erfindungsgemäß wird aber der Schlupf jedes der Asynchronmotoren 4 überwacht und bei Überschreiten eines Schwellwertes ein Abschalten und/oder eine Warnung ausgelöst.

Die Asynchronmotoren 4 werden bei der Erfindung mit einem weichen Regelverfahren geregelt. Als vorteilhaftes weiches Regelverfahren wird ein U/F-Regelverfahren oder alternativ ein spannungsgeführtes Vektororientiertes Regelverfahren verwendet.

Erfindungsgemäß werden die aktuellen Schlupfwerte auf Überschreiten eines zweiten Schwellenwertes überwacht. Bei Überschreiten des zweiten Schwellwertes wird von der Steuerung 1 eine Warnung angezeigt und/oder weitergemeldet über einen Datenbus an zumindest ein weiteres mit dem Datenbus verbundenes elektrisches Gerät. Optional ist auch eine Reduzierung der Solldrehzahl oder des Soll-Drehmoments des Umrichters 2 ermöglicht. Außerdem werden die aktuellen Schlupfwerte von der Steuerung 1 auch auf Überschreiten eines ersten Schwellwertes, dessen Betrag größer ist als der Betrag des ersten Schwellwertes, überwacht. Bei dessen Überschreiten wird der Umrichter 2 abgeschaltet.

### Bezugszeichenliste

1 Steuerung
2 Umrichter
3 Gruppenantrieb, insbesondere formschlüssig zu einem Gruppenantrieb verbundene Antriebe
4 Asynchronmotor
5 Winkelsensor
6 binäres Eingangsmodul

## Patentansprüche

1. Anlage mit **Förderkette und als Asynchronmotoren (4) ausgeführte** Elektromotoren, wobei jeder Elektromotor eine drehbar gelagerte Rotorwelle aufweist,
wobei die Rotorwellen der Elektromotoren miteinander **formschlüssig über Zahnräder** und **Förderkette** gekoppelt, vorgesehen sind,
wobei die Elektromotoren aus einem **einzigen zur Drehfelderzeugung verwendeten** Umrichter (2) gespeist werden,
wobei ein Mittel zur Überwachung des Schlupfes jeder Rotorwelle auf Überschreiten eines ersten Schwellwertes vorgesehen ist,
wobei der Schlupf die Differenzdrehzahl zwischen der jeweiligen Winkelgeschwindigkeit der Rotorwelle und der Frequenz des Drehfeldes ist,
wobei das Mittel geeignet ausgeführt ist, den Schlupf jeder Rotorwelle der Elektromotoren zu überwachen auf Überschreiten eines ersten und zweiten Schwellwertes,
wobei der Betrag des ersten Schwellwertes größer ist als der Betrag des zweiten Schwellwertes,
wobei bei Überschreiten des zweiten Schwellwertes eine Warnung angezeigt und/oder weitergemeldet wird, insbesondere über einen Datenbus an zumindest ein weiteres mit dem Datenbus verbundenes elektrisches Gerät, und wobei die Sollwertvorgabe, wie Solldrehzahl oder Soll-Drehmoment, des Umrichters (2) reduziert wird,
wobei bei Überschreiten des ersten Schwellwertes der Umrichter (2) abgeschaltet wird, insbesondere die Leistungselektronik abgeschaltet oder weggeschaltet wird und/oder die Drehfelderzeugung unterbrochen wird.

2. Anlage nach Anspruch 1,
**dadurch gekennzeichnet, dass**
der Umrichter (2) mit einer Steuerung (1) verbunden ist, die das Mittel zur Überwachung jeweils umfasst.

3. Anlage nach mindestens einem der vorangegangenen Ansprüche,
**dadurch gekennzeichnet, dass**
der Umrichter (2) eine Steuerelektronik aufweist, die eingerichtet ist zur Durchführung eines weichen Regelverfahrens, insbesondere eines U/F-Regelverfahren oder eines spannungsgeführten vektororientierten Regelverfahrens verwendet.

4. Verfahren zum Betreiben einer Anlage mit Förderkette und mechanisch formschlüssig über die Kette gekoppelten, als Asynchronmaschinen ausgeführten Elektromotoren, welche von einem einzigen Umrichter (2) gemeinsam gespeist werden,
wobei der Schlupf jeder Rotorwelle der Elektromotoren überwacht wird auf Überschreiten eines ersten und zweiten Schwellwertes,
**wobei der Betrag des ersten Schwellwertes größer ist als der Betrag des ersten** Schwellwertes,
- **wobei bei Überschreiten** des **zweiten Schwellwertes eine Warnung angezeigt und/oder weitergemeldet wird, insbesondere über einen Datenbus an zumindest ein weiteres mit dem Datenbus verbundenes elektrisches Gerät, und wobei die Sollwertvorgabe, wie Solldrehzahl oder Soll-Drehmoment, des Umrichters (2) reduziert wird,**
- **wobei bei Überschreiten des ersten Schwellwertes der Umrichter (2) abgeschaltet wird, insbesondere die Leistungselektronik abgeschaltet oder weggeschaltet wird und/oder die Drehfelderzeugung unterbrochen wird,**
**wobei der Schlupf die Differenzdrehzahl zwischen der jeweiligen Winkelgeschwindigkeit der Rotorwelle und der Frequenz des Drehfeldes ist.**

## Claims

1. System comprising a conveyor chain and electric motors configured as asynchronous motors (4),
wherein each electric motor has a rotatably mounted rotor shaft,
wherein the rotor shafts of the electric motors are provided in a manner positively coupled together by means of gearwheels and the conveyor chain,
wherein the electric motors are fed from a single converter (2) used for generating a rotating field,
wherein a means to monitor the slip of each rotor shaft for exceeding a first threshold value is provided,
wherein the slip is the rotational speed difference between the angular velocity of the relevant rotor shaft and the frequency of the rotating field,
wherein the means is suitably configured to monitor the slip of each rotor shaft of the electric motors for exceeding a first and a second threshold value,
wherein the absolute value of the first threshold value is greater than the absolute value of the second threshold value,
wherein, if the second threshold value is exceeded, a warning is displayed and/or relayed, in particular by means of a data bus to at least one further electrical unit connected to the data bus, and wherein the setpoint input, such as the target speed or target torque, of the converter (2) is reduced,
wherein, if the first threshold value is exceeded, the converter (2) is shut down, in particular the power electronics are shut down or disconnected and/or the generation of the rotating field is stopped.

2. System according to claim 1,
**characterised in that**
the converter (2) is connected to a controller (1) which in each case comprises the monitoring means.

3. System according to at least one of the preceding claims,
**characterised in that**
the converter (2) has control electronics configured to carry out a soft control method, in particular a V/f control method or a voltage-controlled vector-oriented control method.

4. Method for operating a system comprising a conveyor chain and electric motors which are configured as asynchronous machines, are mechanically positively coupled by means of the chain and are jointly fed by a single converter (2),
wherein the slip of each rotor shaft of the electric motors is monitored for exceeding a first and a second threshold value,
wherein the absolute value of the first threshold value is greater than the absolute value of the first threshold value,
- wherein, if the second threshold value is exceeded, a warning is displayed and/or relayed, in particular by means of a data bus to at least one further electrical unit connected to the data bus, and wherein the setpoint input, such as the target speed or target torque, of the converter (2) is reduced,
- wherein, if the first threshold value is exceeded, the converter (2) is shut down, in particular the power electronics are shut down or disconnected and/or the generation of the rotating field is stopped,
wherein the slip is the rotational speed difference between the angular velocity of the relevant rotor shaft and the frequency of the rotating field.

## Revendications

1. Système avec chaînes de transport et moteurs électriques conçus comme des moteurs asynchrones (4),
chaque moteur électrique présentant un arbre de rotor monté rotatif,
les arbres de rotor des moteurs électriques étant couplés les uns aux autres avec verrouillage par complémentarité de forme par l'intermédiaire de roues dentées et de chaînes de transport,
les moteurs électriques étant alimentés par un onduleur (2) unique utilisé pour générer des champs rotatifs,
un moyen permettant de surveiller le patinage de chaque arbre de rotor relativement au dépassement d'une première valeur de seuil étant fourni,
le patinage étant la vitesse de rotation différentielle entre la vitesse angulaire respective de l'arbre de rotor et la fréquence du champ rotatif,
le moyen étant conçu pour surveiller le patinage de chaque arbre de rotor des moteurs électriques relativement au dépassement d'une première et d'une deuxième valeur de seuil,
le montant de la première valeur de seuil étant supérieur au montant de la deuxième valeur de seuil,
en cas de dépassement de la deuxième valeur de seuil, un avertissement étant affiché et/ou transmis, en particulier par l'intermédiaire d'un bus de données, à au moins un autre appareil électrique connecté au bus de données, et la spécification des valeurs de consigne, telle que la vitesse de rotation de consigne ou le couple de consigne, du convertisseur (2) étant réduite,
en cas de dépassement de la première valeur de seuil, le convertisseur (2) étant coupé, en particulier l'électronique de puissance étant coupée ou éteinte et/ou la génération de champ rotatif étant interrompue.

2. Système selon la revendication 1,
**caractérisé en ce que**
le convertisseur (2) est relié à une commande (1) qui comprend de manière respective le moyen de surveillance.

3. Système selon au moins l'une quelconque des revendications précédentes,
**caractérisé en ce que**
le convertisseur (2) présente une électronique de commande qui est conçue pour mettre en œuvre une procédure de régulation douce, en particulier une procédure de régulation U/F ou une procédure de régulation vectorielle de tension.

4. Procédé de fonctionnement d'un système comprenant des chaînes de transport et des moteurs électriques couplés mécaniquement avec verrouillage par complémentarité de forme par l'intermédiaire des chaînes et conçus comme des machines asynchrones qui sont alimentés conjointement par un convertisseur (2) unique,
le patinage de chaque arbre de rotor des moteurs électriques étant surveillé relativement au dépassement d'une première et d'une deuxième valeur de seuil,
le montant de la première valeur de seuil étant supérieur au montant de la deuxième valeur de seuil,
- en cas de dépassement de la deuxième valeur de seuil, un avertissement étant affiché et/ou transmis, en particulier par l'intermédiaire d'un bus de données, à au moins un autre appareil électrique connecté au bus de données, et la spécification des valeurs de consigne, telle que la vitesse de rotation de consigne ou le couple de consigne, du convertisseur (2) étant réduite,
- en cas de dépassement de la première valeur de seuil, le convertisseur (2) étant coupé, en particulier l'électronique de puissance étant coupée ou éteinte et/ou la génération de champ rotatif étant interrompue.
le patinage étant la vitesse de rotation différentielle entre la vitesse angulaire respective de l'arbre de rotor et la fréquence du champ rotatif,
